(19) Europäisches Patentamt
European Patent Office
Office européen des brevets

(11) **EP 3 925 859 A1**

(12) **EUROPEAN PATENT APPLICATION**

(43) Date of publication:
**22.12.2021 Bulletin 2021/51**

(51) Int Cl.:
**B62D 5/04** (2006.01)       **B62D 6/00** (2006.01)
**B62D 5/06** (2006.01)

(21) Application number: **21174618.5**

(22) Date of filing: **19.05.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2020 JP 2020089404**

(71) Applicant: **JTEKT CORPORATION**
**Chuo-ku,**
**Osaka-shi,**
**Osaka 542-8502 (JP)**

(72) Inventor: **NAGANO, Takanobu**
**Osaka-shi, 542-8502 (JP)**

(74) Representative: **Winter, Brandl - Partnerschaft mbB**
**Alois-Steinecker-Straße 22**
**85354 Freising (DE)**

(54) **MOTOR CONTROL DEVICE AND STEERING SYSTEM**

(57)     A motor control device (100) controls an electric motor (110) in a steering system (200) including a hydraulic mechanism (240) that applies a part of a turning force to a turning mechanism (230) and the electric motor (110) that applies the other part of the turning force. The motor control device (100) includes: an actual turning angle acquiring unit (134) configured to acquire an actual turning angle of turning wheels (220); a target turning angle acquiring unit (131) configured to acquire a target turning angle which is a target value of a turning angle; a control value generating unit (132) configured to generate a motor control value for controlling the electric motor (110) such that the actual turning angle reaches the target turning angle; and an instruction value calculating unit (133) configured to generate an instruction value which is obtained by filtering a natural frequency of the steering system (200) in response to the motor control value.

FIG. 2

**Description**

BACKGROUND OF THE INVENTION

1. Field of the Invention

The invention relates to a motor control device that controls an electric motor in a steering system including a turning mechanism to which parts of a turning force are applied from a hydraulic mechanism and the electric motor and a steering system including the motor control device.

2. Description of Related Art

As described in PCT International Publication No. 2018/055803, there is a steering system including two assist mechanisms including an electric assist using an electric motor and a hydraulic assist using a hydraulic mechanism. The steering system very finely assists with steering using only the electric motor when a steering torque which is input from an operation member such as a steering wheel is small, and assists with the steering using the electric motor and the hydraulic mechanism together when the steering torque is large.

SUMMARY OF THE INVENTION

Currently, in order to realize automated driving techniques, a driver's steering operation may be supported by automatically controlling an electric motor that applies an assist force to the driver's operation, or an automatic control device may perform the steering operation.
When it is intended to introduce these automated driving techniques into a steering system including an electric motor and a hydraulic mechanism, the inventor found that self-excited vibration occurs in a steering system covering an operation member and a turning mechanism.
The invention provides a motor control device that curbs self-excited vibration and a steering system including the motor control device.
According to a first aspect of the invention, there is provided a motor control device that controls an electric motor in a steering system including a hydraulic mechanism that applies a part of a turning force to a turning mechanism which turns turning wheels and the electric motor that applies the other part of the turning force. The motor control device includes: an actual turning angle acquiring unit configured to acquire an actual turning angle of the turning wheels; a target turning angle acquiring unit configured to acquire a target turning angle which is a target value of a turning angle of the turning wheels; a control value generating unit configured to generate a motor control value for controlling the electric motor such that the actual turning angle of the turning wheels reaches the target turning angle; and an instruction value calculating unit configured to generate an instruction value which is obtained by filtering a natural frequency of the steering system in response to the motor control value.
According to a second aspect of the invention, there is provided a steering system including: a turning mechanism that turns turning wheels; a hydraulic mechanism that applies a part of a turning force to the turning mechanism; an electric motor that applies the other part of the turning force to the turning mechanism; a motor control device that controls the electric motor; a first torsion bar that is disposed between the electric motor and an operation member; and a second torsion bar that is disposed between the electric motor and the turning mechanism. The motor control device is configured to acquire an actual turning angle of the turning wheels, to acquire a target turning angle which is a target value of a turning angle of the turning wheels, to generate a motor control value for controlling the electric motor such that the actual turning angle of the turning wheels reaches the target turning angle, and to generate an instruction value which is obtained by filtering a natural frequency based on the first torsion bar and the second torsion bar in response to the motor control value.
According to a third aspect of the invention, there is provided a steering system including: a turning mechanism that turns turning wheels; a hydraulic mechanism that applies a part of a turning force to the turning mechanism; an electric motor that applies the other part of the turning force to the turning mechanism; and a motor control device that controls the electric motor. The motor control device is configured to acquire an actual turning angle of the turning wheels, to acquire a target turning angle which is a target value of a turning angle of the turning wheels, to generate a motor control value for controlling the electric motor such that the actual turning angle of the turning wheels reaches the target turning angle, and to generate an instruction value which is obtained by filtering a natural frequency of the steering system in response to the motor control value.
According to the aspects, it is possible to curb self-excited vibration in a steering system.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram schematically illustrating a steering system including a motor control device;
FIG. 2 is a block diagram illustrating a functional configuration of the motor control device;
FIG. 3 is a diagram illustrating a model of the steering system in view of a natural frequency of the steering system; and
FIG. 4 is a diagram schematically illustrating another example of the steering system including a motor control device.

DETAILED DESCRIPTION OF EMBODIMENTS

Hereinafter, a motor control device according to an embodiment of the invention and a steering system including the motor control device will be described with reference to the accompanying drawings. Numerical values, shapes, materials, constituents, positional relationships and connection states between the constituents, steps, the order of steps described in the following embodiment are merely examples and do not intend to limit the invention. A plurality of inventions may be described as one embodiment in the following description, and elements not described in the appended claims are considered to be arbitrary elements of the inventions according to the claims. The drawings are schematic diagrams subjected to appropriate emphasis, omission, and ratio adjustment to illustrate the invention and may be different from actual shapes, positional relationships, and ratios.

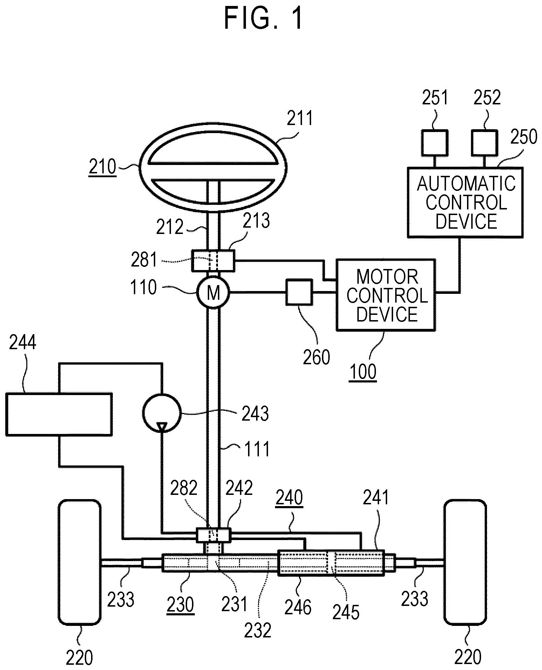

FIG. 1 is a diagram schematically illustrating a steering system including a motor control device. The steering system 200 is a system that turns turning wheels 220 in accordance with a target turning angle and changes a traveling direction of a vehicle in which the steering system 200 is mounted. The steering system 200 includes a turning mechanism 230, a hydraulic mechanism 240, an electric motor 110, a manual operation device 210, and a motor control device 100.

The turning mechanism 230 is a mechanism that turns the turning wheels 220. The turning mechanism 230 is not particularly limited, and a rack-and-pinion is employed in this embodiment. Specifically, the turning mechanism 230 includes a pinion shaft 231, a rack shaft 232, and tie rods 233.

The pinion shaft 231 is a rod-shaped member including a pinion that engages with a rack provided in the rack shaft 232. The pinion shaft 231 is connected to the motor control device 100 and rotates with a torque applied from the motor control device 100 such that the rack shaft 232 moves in an axial direction of the rack shaft 232.

The rack shaft 232 is a member that includes a rack which engages with the pinion shaft 231 and is provided on a part of an outer circumferential surface thereof, converts rotation of the pinion shaft 231 to translation in the axial direction of the rack shaft 232, and turns the turning wheels 220 via the tie rods 233. The hydraulic mechanism 240 is connected to the rack shaft 232, and a part of a turning force for turning the turning wheels 220, that is, an assist force, is hydraulically applied thereto. The rack shaft 232 is accommodated in a rack housing that is attached to a vehicle body and movement of the rack shaft 232 is guided by the rack housing.

The hydraulic mechanism 240 adjusts a hydraulic pressure based on a rotation angle of the pinion shaft 231 or the like and applies a force in the axial direction of the rack shaft 232 as a part of the turning force to the rack shaft 232. The hydraulic mechanism 240 is not particularly limited and includes a power cylinder 241, a rotary valve 242, an oil pump 243, and a reservoir tank 244 in this embodiment.

The power cylinder 241 includes a cylinder 246 which is partitioned into two spaces by a piston 245, and the piston 245 moves in the axial direction of the rack shaft 232 by adjusting hydraulic pressures of oils charging the two spaces. The piston 245 is connected to the rack shaft 232, and the piston 245 applies a force in a moving direction to the rack shaft 232.

The rotary valve 242 is a device that adjusts the hydraulic pressures supplied to the two spaces partitioned by the piston 245. The structure of the rotary valve 242 is not particularly limited and includes a second torsion bar 282 which is interposed between the pinion shaft 231 and the motor control device 100 in this embodiment. The rotary valve 242 controls the operation of the piston 245 by adjusting an amount of oil supplied from the oil pump 243 with relative movement of an inner valve and an outer valve due to torsion of the second torsion bar and supplied to one of the two spaces partitioned by the piston 245 and adjusting an amount of oil recirculating to the reservoir tank 244 out of excess oil in the other space.

The electric motor 110 outputs a part of an assist force which is applied to the turning mechanism 230. A transmission mode of transmitting the driving force generated by the electric motor 110 to the turning mechanism 230 is not particularly limited and the electric motor 110 is connected to a steering shaft member 111 connected to the pinion shaft 231 of the turning mechanism 230 without a reduction gear interposed therebetween and transmits rotation of the output shaft of the electric motor 110 to the pinion shaft 231 at a rotation ratio of 1:1 in this embodiment. A motor turning force which is a turning force applied from the electric motor 110 to the turning mechanism 230 is much less than a hydraulic turning force which is a turning force applied from the hydraulic mechanism 240 to the turning mechanism 230.

For example, most of the force for turning the turning wheels 220 is the hydraulic turning force, and the motor turning force is transmitted to the turning mechanism 230 as a control force (control information) for controlling the turning angle and the turning direction of the turning wheels 220.

The manual operation device 210 is a device that can turn the turning wheels 220 by allowing a driver to operate an operation member 211 such as a steering wheel. In this embodiment, as illustrated in FIG. 1, the manual operation device 210 includes an operation member 211, a shaft member 212, a first torsion bar 281, and a torque detecting device 213. The manual operation device 210 may further include a reaction device and a target turning angle detecting device.

The shaft member 212 is a rod-shaped member that is mechanically connected to the operation member 211 and rotates in response to the operation of the operation member 211. The connection mode between the shaft member 212 and the turning mechanism 230 is not particularly limited and, for example, the shaft member 212 may be mechanically connected to the pinion shaft 231 via the steering shaft member 111 in this embodiment.

The manual operation device 210 may cut off mechanical connection between the shaft member 212 and the pinion shaft 231 using a clutch or the like during automated driving, and may be a so-called linkless steer-by-wire system in which the shaft member 212 and the turning mechanism 230 are not mechanically connected.

The first torsion bar 281 is a member that is disposed in the shaft member 212 and is twisted according to a torque which is input by allowing a driver to operate the operation member 211. The torque detecting device 213 detects an amount of twist of the first torsion bar 281 and outputs an operation torque. The first torsion bar 281 and the torque detecting device 213 are used, for example, in detection of override in automated driving level 2.

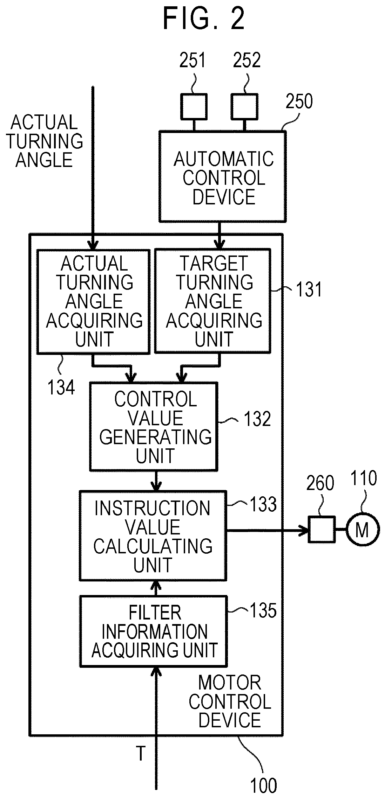

FIG. 2 is a block diagram illustrating the functional configuration of the motor control device. The motor control device 100 is a device that controls the electric motor 110 based on a target turning angle and is an electronic control unit (ECU). The motor control device 100 includes an actual turning angle acquiring unit 134, a target turning angle acquiring unit 131, a control value generating unit 132, and an instruction value calculating unit 133 as processing units which are realized by executing a program. In this embodiment, the motor control device 100 further includes a filter information acquiring unit 135 as a processing unit.

The actual turning angle acquiring unit 134 acquires an actual turning angle of the turning wheels 220. In this embodiment, the actual turning angle acquiring unit 134 acquires the actual turning angle based on a signal which is output from a sensor attached to the turning wheels 220, a link mechanism for turning the turning wheels 220, or the like.

The target turning angle acquiring unit 131 acquires a target turning angle for turning the turning wheels 220. In this embodiment, the target turning angle acquiring unit 131 acquires the target turning angle from an automatic control device 250 that controls the steering system 200 in order to perform automated driving.

The manual operation device 210 may include a target turning angle detecting device. The target turning angle detecting device is a device that detects a rotation angle of the operation member 211 and outputs the detected rotation angle as a target turning angle. For example, the target turning angle detecting device detects the rotation of the shaft member 212 as the rotation of the operation member 211. The type of the target turning angle detecting device is not particularly limited and examples thereof include a resolver attached to the electric motor 110, a rotary encoder, and a device that includes a primary gear rotating along with the shaft member 212 and two secondary gears with different diameters engaging with the primary gear and that can detect a rotation direction as well as the rotation angle of the output shaft by detecting rotation of permanent magnets provided in the secondary gears using a Hall element or the like.

The automatic control device 250 is an ECU that automatically drives the vehicle in which the steering system 200 is mounted. In this embodiment, the automatic control device 250 acquires information on an obstacle, a white line, a signal, and the like outside the vehicle, for example, from a camera 251 or a sensor such as a laser LiDAR 252, sequentially generates a target turning angle corresponding to automated driving based on the acquired information, and outputs the generated target turning angle to the target turning angle acquiring unit 131.

The control value generating unit 132 controls the electric motor 110 such that the actual turning angle of the turning wheels 220 reaches the target turning angle based on the target turning angle acquired by the target turning angle acquiring unit 131 and the actual turning angle acquired by the actual turning angle acquiring unit 134. In this embodiment, the electric motor 110 is supplied with electric power from a PWM inverter 260 including a plurality of switching elements. The control value generating unit 132 generates a target torque for controlling the electric motor 110 based on a difference between the target turning angle and the actual turning angle as a motor control value. In general, PID control is used for generation of a target torque. Specifically, a target torque is calculated as the motor control value by multiplying a term of the difference between the target turning angle and the actual turning angle, an integral term of the difference, and a differential term of the difference by a proportional gain, an integral gain, and a differential gain, respectively, and summing the terms.

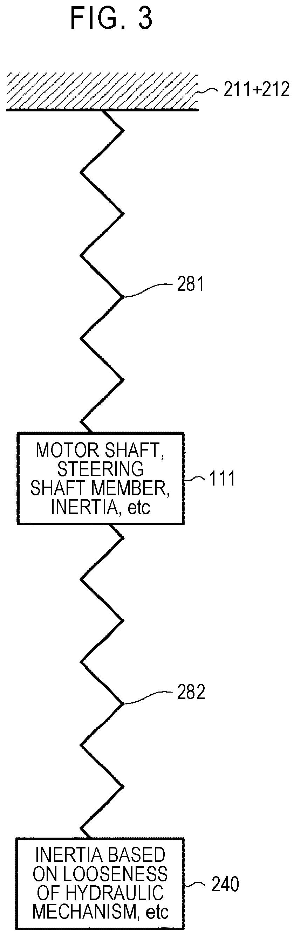

The instruction value calculating unit 133 generates an instruction value obtained by filtering a natural frequency of the steering system 200 in response to the motor control value generated by the control value generating unit 132. In this embodiment, the natural frequency of the steering system 200 can be schematically represented, for example, by a model illustrated in FIG. 3. FIG. 3 schematically illustrates the natural frequency of the steering system 200 being determined by an inertia based on a mass of the motor shaft of the electric motor 110 disposed between the first torsion bar 281 and the second torsion bar 282, the steering shaft member 111, or the like, an inertia generated based on looseness of the hydraulic mechanism 240 connected to the second torsion bar 282, or the like in a state in which a driver has locked the operation member 211.

In this embodiment, the instruction value calculating unit 133 calculates an instruction value based on a low-pass filter with the motor control value acquired from the control value generating unit 132 as an input and outputs the calculated instruction value. The low-pass filter outputs only a frequency lower than the natural frequency of a steering system of the steering system 200. For example, a transfer function of a delay system can be exemplified as one low-pass filter. Specifically, Expression 1 described below represents a model of a first-order delay system.

$$G(s) = 1/(1 + Ts) \qquad\qquad \ldots \text{Expression 1}$$

The instruction value calculating unit 133 converts an instruction value which is a motor control value passing through the low-pass filter to a current command value and outputs the converted current command value to the PWM inverter 260.

The filter information acquiring unit 135 acquires filter information on the filter obtained by analyzing or measuring the natural frequency of the steering system 200. For example, the natural frequency of the steering system 200 may be derived by analysis by setting a spring constant of the first torsion bar 281, a spring constant of the second torsion bar 282, a moment of inertia of a member connected between the first torsion bar 281 and the second torsion bar 282, and a moment of inertia based on the hydraulic mechanism 240 connected to an end of the second torsion bar 282. The natural frequency may be derived by simulation. In actual measurement, a Q-axis current with a frequency $f=1$ Hz to 200 Hz is generated from the electric motor 110 and a position at which the gain is a peak in a relationship between a Q-axis command current and an actual torque may be set as the natural frequency of the steering system 200. The filter information acquiring unit 135 acquires and stores a time constant T derived based on the acquired natural frequency as model information and outputs the model information to the instruction value calculating unit 133.

In the motor control device 100 in which the time constant T acquired by the filter information acquiring unit 135 is input to the instruction value calculating unit 133, even when steering systems 200 are of different types with different natural frequencies, motor control devices 100 which are mounted in the different types of steering systems 200 can be commonized by deriving the T and inputting the derived T to the motor control devices 100.

With the steering system 200 including the motor control device 100, it is possible to curb self-excited vibration in the steering system.

The invention is not limited to the aforementioned embodiment. For example, an embodiment realized by combining elements described in this specification and excluding some elements is included as the embodiment of the invention. Modified examples obtained by performing various modifications considered by those skilled in the art without departing from the gist of the invention, that is, the meaning of words described in the appended claims, are included in the invention.

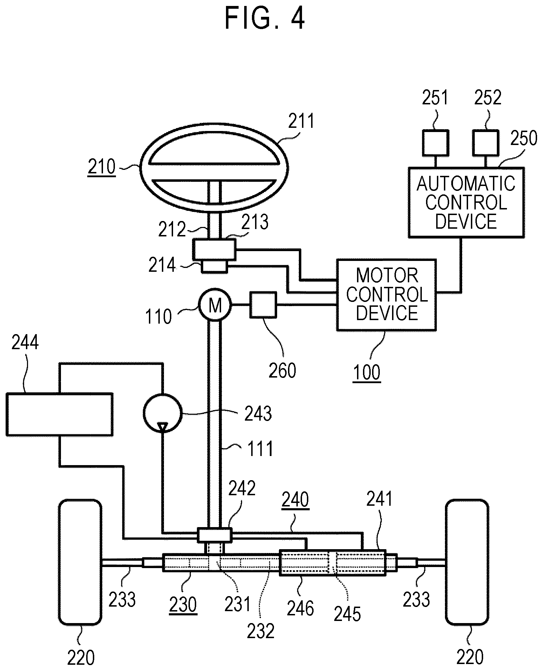

For example, as illustrated in FIG. 4, the steering system 200 may be a linkless steer-by-wire system in which the manual operation device 210 and the turning mechanism 230 are not mechanically connected and the motor control device 100 controls the electric motor 110 such that the turning wheels 220 are turned based on the target turning angle output from the target turning angle detecting device 214 of the manual operation device 210.

The control value generating unit 132 calculates the target torque as the motor control value, but the control value generating unit 132 may convert the calculated target torque to a target current and output the target current as the motor control value. In this case, the instruction value calculating unit 133 may output an instruction value obtained by applying a low-pass filter to the target current to the electric motor 110.

The instruction value calculating unit 133 generates the instruction value obtained by filtering the natural frequency of the steering system 200 in response to the motor control value generated by the control value generating unit 132. However, the instruction value calculating unit 133 may acquire natural frequency information of the difference between the target turning angle and the actual turning angle, and the control value generating unit 132 may acquire the target current by PID control after applying a filter to the difference between the target turning angle and the actual turning angle in consideration of the natural frequency information of the difference between the target turning angle and the actual turning angle.

The instruction value calculating unit 133 outputs an instruction value by calculation based on the low-pass filter with the motor control value acquired from the control value generating unit 132 as an input, converts the instruction value to a current command value, and outputs the current command value to the PWM inverter 260. However, the instruction value calculating unit 133 may convert the motor control value acquired from the control value generating unit 132 to a current value, outputs a current command value by calculation based on the low-pass filter with the current command value as an input, and output the current command value to the PWM inverter 260.

The invention is applicable to a vehicle, particularly, to a large vehicle, an agricultural vehicle, a construction vehicle, and the like which require a large force for turning the turning wheels.

**Claims**

1. A motor control device (100) that controls an electric motor (110) in a steering system (200) including a hydraulic mechanism (240) that applies a part of a turning force to a turning mechanism (230) which turns turning wheels (220) and the electric motor (110) that applies the other part of the turning force, the motor control device (100) **characterized by** comprising:

   an actual turning angle acquiring unit (134) configured to acquire an actual turning angle of the turning wheels (220);
   a target turning angle acquiring unit (131) configured to acquire a target turning angle which is a target value of a turning angle of the turning wheels (220);
   a control value generating unit (132) configured to generate a motor control value for controlling the electric motor (110) such that the actual turning angle of the turning wheels (220) reaches the target turning angle; and
   an instruction value calculating unit (133) configured to generate an instruction value which is obtained by filtering a natural frequency of the steering system (200) in response to the motor control value.

2. The motor control device (100) according to claim 1, **characterized in that** the instruction value calculating unit (133) is configured to calculate the instruction value based on a low-pass filter including a transmission function of a delay system.

3. The motor control device (100) according to claim 1 or 2, **characterized by** further comprising a filter information acquiring unit (135) configured to acquire filter information on a filter which is obtained by analyzing or measuring the natural frequency of the steering system (200).

4. A steering system (200) **characterized by** comprising:

   a turning mechanism (230) that turns turning wheels (220);
   a hydraulic mechanism (240) that applies a part of a turning force to the turning mechanism (230);
   an electric motor (110) that applies the other part of the turning force to the turning mechanism (230);
   a motor control device (100) that controls the electric motor (110);
   a first torsion bar (281) that is disposed between the electric motor (110) and an operation member (211); and
   a second torsion bar (282) that is disposed between the electric motor (110) and the turning mechanism (230),
   wherein the motor control device (100) is configured to acquire an actual turning angle of the turning wheels (220), to acquire a target turning angle which is a target value of a turning angle of the turning wheels (220), to generate a motor control value for controlling the electric motor (110) such that the actual turning angle of the turning wheels (220) reaches the target turning angle, and to generate an instruction value which is obtained by filtering a natural frequency based on the first torsion bar (281) and the second torsion bar (282) in response to the motor control value.

5. A steering system (200) **characterized by** comprising:

   a turning mechanism (230) that turns turning wheels (220);
   a hydraulic mechanism (240) that applies a part of a turning force to the turning mechanism (230);
   an electric motor (110) that applies the other part of the turning force to the turning mechanism (230); and
   a motor control device (100) that controls the electric motor (110);
   wherein the motor control device (100) is configured to acquire an actual turning angle of the turning wheels (220), to acquire a target turning angle which is a target value of a turning angle of the turning wheels (220), to generate a motor control value for controlling the electric motor (110) such that the actual turning angle of the turning wheels (220) reaches the target turning angle, and to generate an instruction value which is obtained by filtering a natural frequency of the steering system (200) in response to the motor control value.

6. The steering system (200) according to claim 5, **characterized in that** the motor control device (100) is configured to calculate the instruction value based on a low-pass filter including a transmission function of a delay system.

7. The steering system (200) according to claim 5 or 6, **characterized in that** the motor control device (100) is configured to acquire filter information on a filter which is obtained by analyzing or measuring the natural frequency of the steering system (200).

# FIG. 1

# FIG. 2

# FIG. 3

~ 211+212

~ 281

| MOTOR SHAFT, STEERING SHAFT MEMBER, INERTIA, etc | ~ 111 |

~ 282

| INERTIA BASED ON LOOSENESS OF HYDRAULIC MECHANISM, etc | ~ 240 |

# FIG. 4

Europäisches
Patentamt

European
Patent Office

Office européen
des brevets

# EUROPEAN SEARCH REPORT

Application Number

EP 21 17 4618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/168802 A1 (MATSUMURA TATSUO [JP]) 6 June 2019 (2019-06-06) * paragraph [0024]; figure 1 * * paragraph [0030] * * paragraph [0033] - paragraph [0034] * * paragraph [0091] - paragraph [0095] * | 1-7 | INV. B62D5/04 B62D6/00 B62D5/06 |
| Y | US 10 358 163 B2 (NSK LTD [JP]) 23 July 2019 (2019-07-23) * column 9 - column 12; figures 5-9 * | 1-7 | |
| A | US 2016/129935 A1 (AKATSUKA HISAYA [JP] ET AL) 12 May 2016 (2016-05-12) * paragraph [0060] * | 1 | |
| A | US 2019/308661 A1 (NAIK ANAND PRADIP [US] ET AL) 10 October 2019 (2019-10-10) * paragraph [0015] - paragraph [0017]; figure 1 * | 1 | |
| A | WO 2013/119147 A1 (VOLVO LASTVAGNAR AB [SE]; RAGNHULT STEN [SE] ET AL.) 15 August 2013 (2013-08-15) * abstract * | 1 | TECHNICAL FIELDS SEARCHED (IPC) B62D |
| A | US 2003/120404 A1 (ENDO SHUJI [JP]) 26 June 2003 (2003-06-26) * paragraph [0012] - paragraph [0013] * | 1 | |

The present search report has been drawn up for all claims

| Place of search | Date of completion of the search | Examiner |
|---|---|---|
| The Hague | 10 November 2021 | Pemberton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 17 4618

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2021

| Patent document cited in search report | | | Publication date | Patent family member(s) | | | Publication date |
|---|---|---|---|---|---|---|---|
| US 2019168802 | A1 | | 06-06-2019 | CN | 109476338 | A | 15-03-2019 |
| | | | | DE | 112017004715 | T5 | 13-06-2019 |
| | | | | JP | 6656390 | B2 | 04-03-2020 |
| | | | | JP | WO2018055803 | A1 | 18-04-2019 |
| | | | | US | 2019168802 | A1 | 06-06-2019 |
| | | | | WO | 2018055803 | A1 | 29-03-2018 |
| US 10358163 | B2 | | 23-07-2019 | CN | 108698639 | A | 23-10-2018 |
| | | | | EP | 3378734 | A1 | 26-09-2018 |
| | | | | JP | 6354925 | B2 | 11-07-2018 |
| | | | | JP | WO2017150445 | A1 | 30-08-2018 |
| | | | | US | 2019002019 | A1 | 03-01-2019 |
| | | | | WO | 2017150445 | A1 | 08-09-2017 |
| US 2016129935 | A1 | | 12-05-2016 | JP | 6287767 | B2 | 07-03-2018 |
| | | | | JP | 2016088434 | A | 23-05-2016 |
| | | | | US | 2016129935 | A1 | 12-05-2016 |
| US 2019308661 | A1 | | 10-10-2019 | CN | 110341788 | A | 18-10-2019 |
| | | | | DE | 102019108486 | A1 | 10-10-2019 |
| | | | | US | 2019308661 | A1 | 10-10-2019 |
| WO 2013119147 | A1 | | 15-08-2013 | NONE | | | |
| US 2003120404 | A1 | | 26-06-2003 | DE | 10192088 | T1 | 03-04-2003 |
| | | | | GB | 2367543 | A | 10-04-2002 |
| | | | | JP | 3780823 | B2 | 31-05-2006 |
| | | | | JP | 2001334948 | A | 04-12-2001 |
| | | | | US | 2003120404 | A1 | 26-06-2003 |
| | | | | WO | 0189911 | A1 | 29-11-2001 |

EPO FORM P0459

For more details about this annex : see Official Journal of the European Patent Office, No. 12/82

**EP 3 925 859 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018055803 PCT